# EUROPEAN PATENT APPLICATION

(11) **EP 4 808 136 A1**
(43) Date of publication of application: **16.09.2026**
(21) Application number: 26164092.4
(22) Date of filing: 11.03.2026
(51) Int. Cl.: H04N 23/60, H04N 23/71, H04N 25/00, H04N 25/47, H04N 25/707

(54) **SYSTEM, EVENT SENSOR, DATA PROCESSING DEVICE AND METHOD**

(30) Priority: 13.03.2025 EP 25163638
(71) Applicant: Sony Group Corporation, Tokyo 108-0075 (JP)
(72) Inventor: BECKER, Florian, 70372 Stuttgart (DE)
(74) Representative: MFG Patentanwälte Meyer-Wildhagen Meggle-Freund Gerhard PartG mbB

(57) **Abstract**

A system, wherein the system includes:
an event sensor including a plurality of event pixels, wherein each event pixel is configured to detect, based on a reference value and threshold values, a brightness change in a scene to generate an event, and wherein the event sensor is configured to output an event stream;
a data source configured to provide a data stream, wherein the data stream includes sensor data or control data;
a data processing device including circuitry configured to:
receive the event stream from the event sensor and the data stream from the data source;
predict, based on the event stream and the data stream, a change in the scene;
generate, based on the predicted change in the scene and the event stream, a brightness prediction model for the at least one event pixel;
send the brightness prediction model to the event sensor; and

wherein the event sensor is configured to receive the brightness prediction model for the at least one event pixel from the data processing device and to adapt the reference value of the at least one event pixel in accordance with the received brightness prediction model.

## Description

### TECHNICAL FIELD

The present disclosure generally pertains to a system, an event sensor, a data processing device and a method.

### TECHNICAL BACKGROUND

Generally, event sensors or cameras are known. In contrast to classical cameras, event cameras (which may also be referred to as neuromorphic camera, silicon retina or dynamic vision sensor) report pixel-wise changes in brightness asynchronously with a latency typically in the order of microseconds.

Their functionality can be summarized as assuming a static scene - e.g. including fixed scene setup, objects, camera position, lighting and reflection properties - and reporting any deviation from this, wherein the deviation leads to a brightness change detected by the event camera.

Known or regular event cameras implement their functionality as storing a pixel-wise reference value for an expected measurement and generate an event if measurements deviate from this reference value and a predetermined range around the reference value - possibly expressed by threshold values. Then, the reference value of the event pixel is updated to match the new measurement.

However, in scenarios where scene changes are the normal case, i.e. a lot of events are triggered, such hat a high bandwidth is needed for data transport and signal processing. These peak requirements may be matched by the infrastructure - which, however, increases production and energy costs - or there is the risk of losing information if the limits are exceeded.

Although there exist techniques for event sensors and for controlling the generation of events by event sensors, it is generally desirable to improve the existing techniques.

### SUMMARY

According to a first aspect, the disclosure provides a system, comprising:
an event sensor including a plurality of event pixels, wherein each event pixel is configured to detect, based on a reference value and threshold values, a brightness change in a scene to generate an event, and wherein the event sensor is configured to output an event stream;
a data source configured to provide a data stream, wherein the data stream includes sensor data or control data;
a data processing device including circuitry configured to:
   receive the event stream from the event sensor and the data stream from the data source;
   predict, based on the event stream and the data stream, a change in the scene;
   generate, based on the predicted change in the scene and the event stream, a brightness prediction model for at least one event pixel;
   send the brightness prediction model to the event sensor; and
wherein the event sensor is configured to receive the brightness prediction model for the at least one event pixel from the data processing device and to adapt the reference value of the at least one event pixel in accordance with the received brightness prediction model.

According to a second aspect, the disclosure provides an event sensor, comprising:
a plurality of event pixels, wherein each event pixel is configured to detect, based on a reference value and threshold values, a brightness change in a scene to generate an event;
circuitry configured to:
   output an event stream;
   receive a brightness prediction model for at least one event pixel; and
   adapt the reference value of the at least one event pixel in accordance with the received brightness prediction model.

According to a third aspect, the disclosure provides a data processing device, comprising circuitry configured to:
receive an event stream from an event sensor and a data stream from a data source, wherein the event stream includes events generated based on a detected change in brightness in a scene, and wherein the data stream includes sensor data or control data;
predict, based on the event stream and the data stream, a change in the scene;
generate, based on the predicted change in the scene and the event stream, a brightness prediction model for the at least one event pixel; and
send the brightness prediction model to the event sensor for adapting the reference value of the at least one event pixel in accordance with the brightness prediction model.

According to a fourth aspect, the disclosure provides a method, comprising:
receiving an event stream from the event sensor and a data stream from a data source, wherein the event stream includes events generated based on a detected change in brightness in a scene, and wherein the data stream includes sensor data or control data;
predicting, based on the event stream and the data stream, a change in the scene;
generating, based on the predicted change in the scene and the event stream, a brightness prediction model for the at least one event pixel; and
sending the brightness prediction model to the event sensor for adapting the reference value of the at least one event pixel in accordance with the brightness prediction model.

Further aspects are set forth in the dependent claims, the drawings and the following description.

### BRIEF DESCRIPTION OF THE DRAWINGS

Embodiments are explained by way of example with respect to the accompanying drawings, in which:
Fig. 1 schematically illustrates in a block diagram an embodiment of a system;
Fig. 2 schematically illustrates in a block diagram an embodiment of a regular event pixel;
Fig. 3 schematically illustrates in a block diagram an embodiment of an event pixel;
Fig. 4 schematically illustrates in a block diagram an embodiment of a system;
Fig. 5 schematically illustrates in a graph an embodiment of a brightness prediction model;
Fig. 6 schematically illustrates in a graph an embodiment of a brightness prediction model;
Fig. 7 schematically illustrates in a graph an embodiment of a brightness prediction model;
Fig. 8 schematically illustrates in a graph an embodiment of a brightness prediction model;
Fig. 9 schematically illustrates an embodiment of a method for generating a brightness prediction model, wherein Fig. 9A schematically illustrates in a block diagram an embodiment of a matrix of event pixels and Fig. 9B schematically illustrates in a graph an embodiment of a future time-dependent brightness associated with an event pixel;
Fig. 10 schematically illustrates an embodiment of a method for generating a brightness prediction model, wherein Fig. 10A schematically illustrates in a block diagram an embodiment of a matrix of event pixels and Fig. 10B schematically illustrates in a graph an embodiment of a future time-dependent brightness associated with an event pixel; and
Fig. 11 schematically illustrates in a flow diagram an embodiment of a method.

### DETAILED DESCRIPTION OF EMBODIMENTS

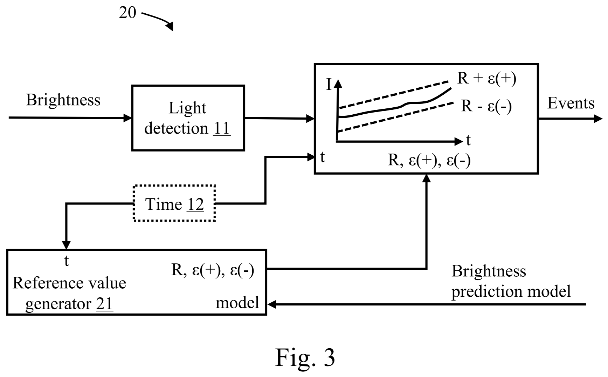

Before a detailed description of the embodiments under reference of Fig. 3 is given, general explanations are made.

As mentioned in the outset, generally, event sensors or cameras are known.

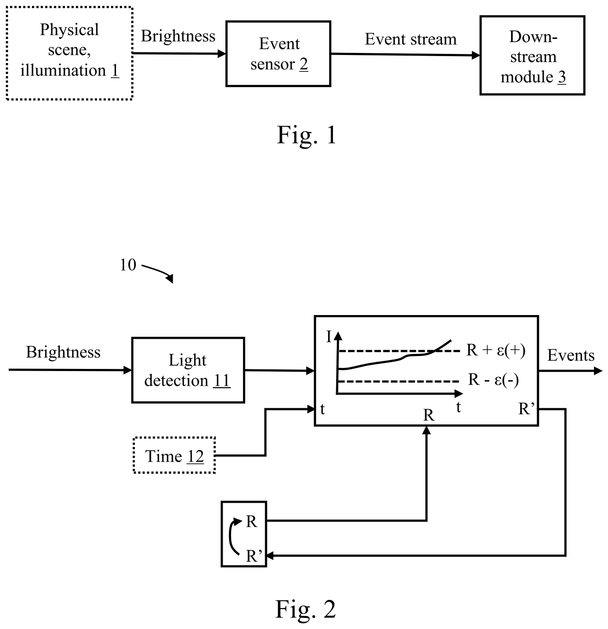

For enhancing the general understanding of the present disclosure, an embodiment of a system that uses an event sensor 2 and an embodiment of a regular event pixel 10 will be discussed in the following under reference of Fig. 1 and Fig. 2, respectively, which illustrate the respective embodiment.

Referring to Fig. 1, a scene 1 has a certain brightness which is detected by an event sensor 2, which has a plurality of event pixels typically arranged in a matrix. If the brightness fluctuates and the fluctuations exceed certain threshold values, the event pixel that has detected the brightness change generates a signal that is indicative for an event.

The event sensor 2 than generates the event based on the signal from the respective event pixel. An event includes a position or pixel coordinates of the event pixel that has triggered the event, a time stamp and a polarity indicating whether the brightness has increased or decreased. The event may further include the actual brightness value, for example measured and output as intensity.

The event sensor 2 may then output an event stream that includes events generated based on a detected change in brightness in the scene 1.

The event stream may be provided to a down-stream module 3. The down-stream module 3 may be an application that uses the event stream, for example, the application may be a surveillance application or an application for generating a three-dimensional representation of the scene for navigating a vehicle in the environment.

Referring now to Fig. 2, the event pixel 10 includes a light detector 11 configured to detect a brightness of a part of the scene, which is imaged on the event pixel 10. The brightness may be measured as intensity I.

The event pixel 10 determines - at certain time points in accordance with a clock signal 12 - whether the measured light intensity or brightness is within a predetermined range given by a current reference value R (which may also be referred to as expected brightness value) and the threshold values ε(+) and ε(-).

Once the event pixel 10 determines that the brightness exceeds the predetermined range, it triggers an event and the reference value is updated as R' = R + (ε(+) + ε(-)) for a positive event (increasing brightness) and as R' = R - (ε(+) + ε(-)) for a negative event (decreasing brightness).

Returning to the general explanations, as mentioned in the outset, however, in scenarios where scene changes are the normal case, i.e. a lot of events are triggered, such hat a high bandwidth is needed for data transport and signal processing.

Generally, the event sensor may be static or may move. In the case of a static event sensor, only a dynamic part of a scene will generate events, for example moving objects (e.g., cars or pedestrians), and a static part of a scene (e.g., buildings) does not generate events if the illumination if does not change. In the case of a moving event sensor, also the static part of a scene contributes to the generation of events, since the static part of the scene moves relative to the event sensor such that many events are generated due to the movement of the event sensor in the static world. However, also the dynamic part of the scene causes the generation of events. Thus, the generated events due to the movement in the static world may conceal the events due to the dynamic world (e.g., cars). This makes it more difficult to separate the static world events from the dynamic world events afterwards.

It has been recognized that the event generation of the event sensor should be controlled in a way to reduce or remove events caused by predictable scene changes and which thus does not lead to an information gain when understanding the scene. The remaining events are caused by deviations from the prediction and may be important, for example for a down-stream application, since the remaining events may predominantly be caused by the dynamic world.

It has thus been recognized that a regular event sensor should be modified to accept models for the future expected brightness values in each pixel from an external source.

Hence, some embodiments pertain to an event sensor, wherein the event sensor includes:
a plurality of event pixels, wherein each event pixel is configured to detect, based on a reference value and threshold values, a brightness change in a scene to generate an event;
circuitry configured to:
   output an event stream;
   receive a brightness prediction model for at least one event pixel; and
   adapt the reference value of the at least one event pixel in accordance with the received brightness prediction model.

In some embodiments, each event pixel is equipped with an additional logic (which may be referred to as reference value generator) which stores the received brightness prediction model and generates a possibly time-varying reference value in accordance with the brightness prediction model to replace the constant reference value of a regular event sensor.

Further, in some embodiments, the thresholds for identifying significant deviations from the reference value according to the brightness prediction model can also be adapted.

As mentioned above, the accepted brightness prediction models can be time varying, and can be defined per event pixel, a group of event pixels or the whole event sensor (i.e. every of the plurality of event pixels). The brightness prediction model includes a reference value to be used and, optionally, also threshold values to be used.

An embodiment of an event pixel 20 will be discussed in the following under reference of Fig. 3, which schematically illustrates the embodiment in a block diagram.

The event pixel 20 is a modified event pixel compared to the regular event pixel 10 of Fig. 2.

The event pixel 20 includes a reference value generator 21 in which a received brightness prediction model is stored.

The reference value generator 21 then uses the stored brightness prediction model to adapt the reference value R over time. The threshold values ε(+) and ε(-) may also be adapted and included in the brightness prediction model.

As depicted in Fig. 3, the reference value may, for instance, linearly increase over time. The measured brightness is now within the boundaries for each time point such that no generation of an event is triggered. When the actual brightness evolution matches a predicted brightness evolution from which the reference values in the brightness prediction model are determined, no events are generated.

Returning to the general explanations, it has further been recognized that for predicting the brightness measured by an event pixel in the future, a change in the scene should be predicted.

It has been recognized that an additional data processing device or processing unit or prediction module may be used to generate the brightness prediction models which takes into account information from at least two sources: the event sensor - i.e. event stream of generated (i.e. previous) events - and from another data source (e.g., from an additional sensor or from a down-stream application).

Some embodiments pertain to a data processing device, wherein the data processing device includes circuitry configured to:
receive an event stream from an event sensor and a data stream from a data source, wherein the event stream includes events generated based on a detected change in brightness in a scene, and wherein the data stream includes sensor data or control data;
predict, based on the event stream and the data stream, a change in the scene;
generate, based on the predicted change in the scene and the event stream, a brightness prediction model for the at least one event pixel; and
send the brightness prediction model to the event sensor for adapting the reference value of the at least one event pixel in accordance with the brightness prediction model.

The data processing device may an embedded data processing module, a computer, a server or the like.

The circuitry may be based on or may include or may be implemented by typical electronic components configured to achieve the functionality as described herein.

The circuitry may be based on or may include or may be implemented as integrated circuity logic and the functionality may be implemented by software executed by a processor or the like. The circuitry may be based on or may include or may be implemented by a CPU (central processing unit), a microcontroller, an FPGA (field programmable gate array), an ASIC (application specific integrated circuit), a GPU (graphical processing unit), a DSP (digital signal processor) or the like.

The circuitry may be based on or may include or may be implemented in parts by typical electronic components and integrated circuitry logic and in parts by software.

The circuitry may include storage capabilities such as magnetic storage, semiconductor storage, etc.

The circuitry may include a data bus for transmitting and receiving data and may implement corresponding communication protocols.

The circuitry may include one or more communication interfaces for communicating via a wired or wireless network.

Consequently, some embodiments pertain to a system, wherein the system includes:
an event sensor including a plurality of event pixels, wherein each event pixel is configured to detect, based on a reference value and threshold values, a brightness change in a scene to generate an event, and wherein the event sensor is configured to output an event stream;
a data source configured to provide a data stream, wherein the data stream includes sensor data or control data;
a data processing device including circuitry configured to:
   receive the event stream from the event sensor and the data stream from the data source;
   predict, based on the event stream and the data stream, a change in the scene;
   generate, based on the predicted change in the scene and the event stream, a brightness prediction model for at least one event pixel;
   send the brightness prediction model to the event sensor; and
wherein the event sensor is configured to receive the brightness prediction model for the at least one event pixel from the data processing device and to adapt the reference value of the at least one event pixel in accordance with the received brightness prediction model.

The data source may be a sensor such as an inertial measurement unit ("IMU"), a global navigation satellite system ("GNSS"), a LiDAR ("Light Detection And Ranging") sensor, another event sensor, an image sensor or camera (e.g., RGB ("red-green-blue") camera) or the like.

Thus, the sensor data may be or may include velocity and acceleration data, depth data, event data or image data.

The data source may be an application or a clock. The application may use the event stream.

The application may be a control application for a vehicle (e.g., a robot or a car) or a surveillance camera or a traffic light.

In some embodiments, the circuitry of the data processing device is configured to run the application.

Thus, the control data may be or may include velocity and acceleration data of the vehicle or steering, breaking and acceleration commands for the vehicle. The control data may be or may include rotation data or zoom data of the surveillance camera. The control data may be or may include switching commands for the traffic light.

Hence, in some embodiments, the data source is an application that uses the event stream, and the data stream includes control data indicating a movement of the event sensor, and the circuity is configured to provide the brightness prediction model for the at least one event pixel to the application.

The system may be implemented as a distributed system in which the event sensor, the data source and the data processing device are physically separated from each other or remote to each other.

The event sensor and the data source may be implemented as an apparatus.

The system, i.e. the event sensor and the data source and the data processing device, may be implemented as an apparatus.

The apparatus may be a camera (e.g., a surveillance camera), a vehicle (e.g., a robot or a car), a mobile electronic device (e.g., a smartphone) or the like.

As mentioned above, the circuitry is configured to predict, based on the event stream and the data stream, a change in the scene.

In some embodiments, the circuitry is configured to predict, based on the data stream, a relative movement of a static part of the scene with respect to the event sensor as the change in the scene.

For example, the control data from a control application of a vehicle may indicate a velocity, an acceleration and a steering of the vehicle such that the circuitry can predict the relative movement of the event sensor to the static part of the scene. Thus, the circuitry can predict how much and in which direction the current image on the event sensor will move in a certain time interval. Hence, the circuitry can predict for a particular event pixel that a current brightness of a neighboring event pixel may be present on the particular event pixel in the future after the certain time interval.

In some embodiments, the circuity is configured to predict, based on at least one of the event stream and the data stream, a change of illumination of the scene as the change of the scene.

For example, the events in the event stream may indicate that periodically the same sequence of events is generated by one or more event pixels, e.g., due to a traffic light which periodically switches on and off and, thus, the change of illumination of the scene can be predicted.

Moreover, the control data may include switching commands for the traffic light such that the change of illumination of the scene can be predicted.

The circuitry may predict the movement of the sun based on received time information from a clock such that the change of illumination of the scene can be predicted.

As mentioned above, the circuitry is configured to generate, based on the predicted change in the scene and the event stream, a brightness prediction model for at least one event pixel and send the brightness prediction model to the event sensor.

In some embodiments, the circuitry is configured to determine, based on the event stream, a current reference value of each of the plurality of event pixels, in particular of the at least one event pixel and one or more neighboring event pixels of the at least one event pixel.

In other words, in some embodiments, generating the brightness prediction model includes determining, based on the event stream, a current reference value of each of the plurality of event pixels, in particular of the at least one event pixel and one or more neighboring event pixels of the at least one event pixel.

The events of the stream generated by the plurality of event pixels, in particular by the at least one event pixel and one or more neighboring event pixels, may include the actual brightness value at the time of triggering the event.

In other embodiments, the circuitry may sum up all events with respect to a reference point (e.g., an initial configuration of reference values may be reported by the event sensor at initialization) to determine the current reference value of each of the plurality of event pixels, in particular of the at least one event pixel and one or more neighboring event pixels of the at least one event pixel.

In some embodiments, the brightness prediction model includes a time-dependent reference value to be used by the at least one event pixel. In some embodiments, the brightness prediction model includes time-dependent threshold values to be used by at least one event pixel.

In the case of a period or predictable change of illumination of the scene, as discussed above, the circuitry may determine a low reference value and a high reference value of the event pixels that detected the periodic sequence of events and may use these reference values in the brightness prediction model. The low reference value may be used for the time when the traffic light is switched off and the high reference value may be used for the time when the traffic light is switched on.

The current reference value may be used as a starting point for the brightness prediction model.

In the case of a relative movement of the event sensor with respect to a static part of the scene, as discussed above, the circuitry may predict for a particular event pixel that a current brightness of a neighboring event pixel may be present on the particular event pixel in the future after a certain time interval. The circuitry may then use the current reference value of the neighboring event pixel for the particular event pixel as a target reference value that should be reached after the certain time interval. The change towards the target reference value may be linear or non-linear (e.g., a spline or a quadratic or cubic function).

In some embodiments, the brightness prediction model indicates a piecewise constant reference value or a constant change rate of the reference value.

In some embodiments, the brightness prediction model indicates a reference value that continuously changes from the current reference value towards a target reference value, and the target reference value is based on a current reference value of at least one neighboring event pixel of the at least one event pixel.

In some embodiments, the brightness prediction model indicates a list of target reference values to be used in sequence, and each target reference value corresponds to a current reference value of a different neighboring event pixel.

In some embodiments, the brightness prediction model includes a sequence of brightness prediction models or an indication of a periodic repetition of one or more brightness prediction models.

In some embodiments, the circuitry is configured to update the brightness prediction model every fixed time interval or when a preset time limit has elapsed or when the event stream indicates that the current brightness prediction model is not suitable anymore.

Some embodiments pertain to a method, wherein the method includes:
receiving an event stream from the event sensor and a data stream from a data source, wherein the event stream includes events generated based on a detected change in brightness in a scene, and wherein the data stream includes sensor data or control data;
predicting, based on the event stream and the data stream, a change in the scene;
generating, based on the predicted change in the scene and the event stream, a brightness prediction model for the at least one event pixel; and
sending the brightness prediction model to the event sensor for adapting the reference value of the at least one event pixel in accordance with the brightness prediction model.

The method may be performed by the data processing device as described herein.

The methods as described herein are also implemented in some embodiments as a computer program causing a computer and/or a processor to perform the method, when being carried out on the computer and/or processor. In some embodiments, also a non-transitory computer-readable recording medium is provided that stores therein a computer program product, which, when executed by a processor, such as the processor described above, causes the methods described herein to be performed.

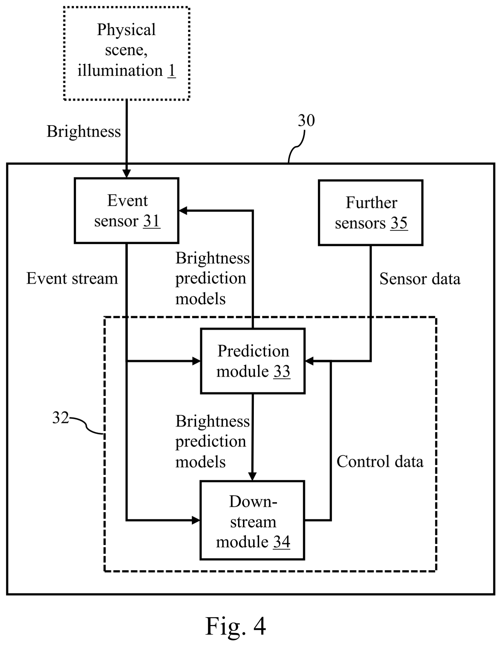

Returning to Fig. 4, there is schematically illustrated in a block diagram an embodiment of a system 30, which is discussed in the following.

The system 30 includes an event sensor 31, a data processing device 32 which runs a prediction module 33 and a down-stream module 34. The system further includes one or more sensors 35.

The event sensor 31 outputs an event stream to the prediction module 33 and the down-stream module 34, which is an application that uses the event stream.

The event sensor 31 includes a plurality of event pixels as discussed under reference of Fig. 3. Each event pixel is configured to detect, based on a reference value and threshold values, a brightness change in a scene 1 to generate an event.

The event stream thus includes events generated based on a detected change in brightness in the scene 1.

The down-stream module 34 sends control data to the prediction module 33 and the one or more sensors 35 send sensor data to the prediction module 33.

Thus, the prediction module 33 receives the event stream and a data stream of a data source, wherein the data stream includes sensor data or control data.

The prediction module 33 determines, based on the event stream, a current reference value of at least one event pixel.

Moreover, the prediction module 33 predicts, based on the event stream and the data stream, a change in the scene 1 and generates, based on the predicted change in the scene and the determined current reference value, a brightness prediction model for the at least one event pixel.

Then, the prediction module 33 sends the brightness prediction model to the event sensor 31.

The events sensor 31 receives the brightness prediction model for the at least one event pixel from the prediction module 33 and adapts the reference value of the at least one event pixel in accordance with the received brightness prediction model.

When the brightness prediction model is generated and sent to the event sensor 31, the prediction module 33 may include, for instance, information on the model type, affected pixels, timestamp from which it is valid on and until when it is valid.

The prediction models may be valid for a reasonable time such that the increased effort for computing, transferring, and implementing the model is still more efficient than transferring events in their raw form.

In the following examples, the processes behind the changes have a low dynamic compared to the induced changes in the brightness values and thus can be well approximated by a model.

In the following, examples for a brightness prediction model are discussed.

The "Parameters" are the values that describe the detailed behavior of the model, the "Model" describes how the time-dependent reference value is generated. "Variants" are possible modifications and extensions to the basic version of the model. "Application examples" describe possible scenarios where the described model can be useful.

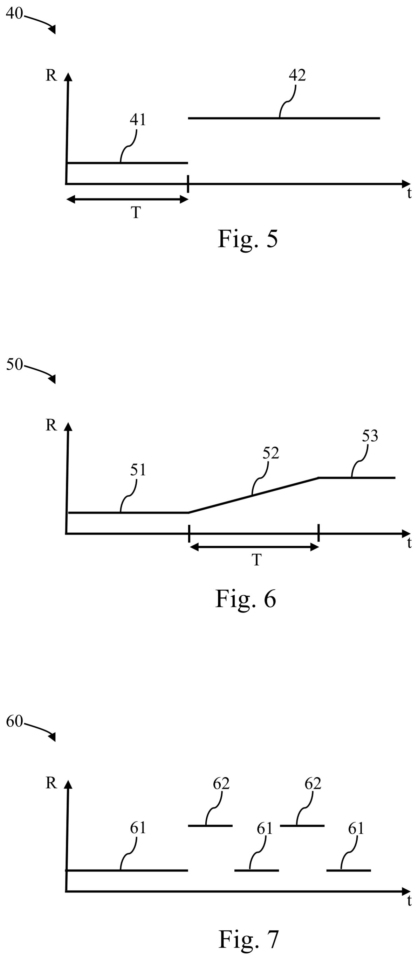

Fig. 5 schematically illustrates in a graph an embodiment of a brightness prediction model 40, which is discussed in the following.

During time period T, the current reference value 41 of the event pixel, for which the brightness prediction model is intended, is to be used by the event pixel. Then, a constant new reference value 42 is to be used.

Model Example 1: Piecewise constant brightness.

Parameters: Time period T; new reference value P.

Model: Keep current reference value R for time period T, then change reference value to P.

Variants: Time period T indicates a point in time relative to a common reference point, e.g. sensor startup.

Application examples: An object that moves through the scene and occludes the background.

Fig. 6 schematically illustrates in a graph an embodiment of a brightness prediction model 50, which is discussed in the following.

In the beginning, the current reference value 51 of the event pixel, for which the brightness prediction model is intended, may to be used by the event pixel. Then, at 52, the reference value shall constantly change (e.g., increase) during a time period T with a certain slope until the target reference value 53 is reached and to be used by the event pixel.

Model Example 2: Constant change rate.

Parameters: Initial reference value P; brightness slope S.

Model: Immediately set reference value R to P, then constantly update it with time with change rate S.

Variants: Restrict the reference value change to a time period T; keep reference value constant after the duration of the period T is changed; multiplicative instead of additive change rate.

Application examples: Change of illumination.

Fig. 7 schematically illustrates in a graph an embodiment of a brightness prediction model 60, which is discussed in the following.

The brightness prediction model 60 is another example for a piecewise constant reference value to be used by the event pixel.

In the beginning, the current reference value 61 of the event pixel, for which the brightness prediction model is intended, is to be used by the event pixel. Then, a constant new reference value 62 is to be used. Then, after a certain amount of time, the initial current reference value 61 is to be used again. Then, the constant new reference value 62 is to be used again.

In the following, an application example is discussed.

Application Example 1: Compensation of illumination changes.

Setup: Camera with event sensor 31 with fixed position and viewpoint; usually static scene, but with changing illumination, e.g. controlled (active lighting) or predictable (sun).

Example applications: Surveillance; automotive for suppression of flashing lights or turn-signal indicator.

Aim: Suppress events caused by predictable brightness changes; keep events related to any other scene changes, e.g. moving persons.

### Implementation:

Receive (e.g., by the prediction module 33) information on future lighting changes from active lighting control or from sun motion prediction or sensor or from a detector of periodically repeating illumination patterns, e.g. blinking lights.

For each event pixel, generate (e.g., by the prediction module 33) a brightness prediction model based on a reference image (at reference illumination), a predicted illumination change, and model the event pixel behavior under brightness changes.

For each event pixel, generate (e.g., by the prediction module 33) a constant change brightness prediction model as a periodic sequence of reference values (blinking lights).

Send (e.g., by the prediction module 33) the brightness prediction model to the event sensor 31 and the down-stream module 34.

Event pixel receives the brightness prediction model, and the reference value generator 13 (see Fig. 3) continuously updates the reference value based on the brightness prediction model and timer information.

Down-stream module 34 receives the brightness prediction model and events.

Alternatively, the brightness prediction model 50 of Fig. 6 may be used in this application example.

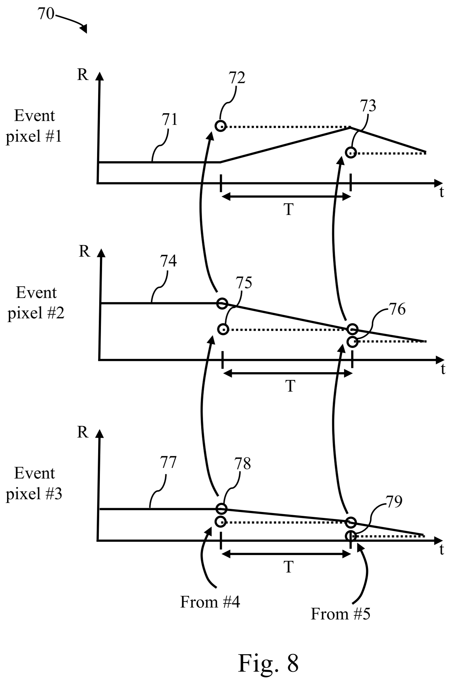

Fig. 8 schematically illustrates in a graph an embodiment of a brightness prediction model 70, which is discussed in the following.

For event pixel #1:
In the beginning, the current reference value 71 of the event pixel #1, for which the brightness prediction model is intended, is to be used by the event pixel #1. Then, the event pixel #1 shall linearly change the reference value towards a target reference value 72, wherein the target reference value 72 is based on a current reference value of a neighboring event pixel, here event pixel #2, as indicated by the upper left arrow. Then, event pixel #1 shall linearly change the reference value towards a target reference value 73, wherein the target reference value 73 is based on a current reference value of a neighboring event pixel, here event pixel #3, as indicated by the upper right arrow and the middle left arrow.

Hence, the brightness prediction model for event pixel #1 indicates a list of target reference values to be used in sequence, wherein each target reference value corresponds to a current reference value of a different neighboring event pixel, here event pixel #2 and then event pixel #3.

For event pixel #2 similarly:
In the beginning, the current reference value 74 of the event pixel #2, for which the brightness prediction model is intended, is to be used by the event pixel #2. Then, the event pixel #2 shall linearly change the reference value towards a target reference value 75, wherein the target reference value 75 is based on a current reference value of a neighboring event pixel, here event pixel #3, as indicated by the middle left arrow. Then, event pixel #2 shall linearly change the reference value towards a target reference value 76, wherein the target reference value 76 is based on a current reference value of a neighboring event pixel, here event pixel #4, as indicated by the middle right arrow and the lower left arrow.

Hence, the brightness prediction model for event pixel #2 indicates a list of target reference values to be used in sequence, wherein each target reference value corresponds to a current reference value of a different neighboring event pixel, here event pixel #3 and then event pixel #4.

For event pixel #3 similarly:
In the beginning, the current reference value 77 of the event pixel #3, for which the brightness prediction model is intended, is to be used by the event pixel #3. Then, the event pixel #3 shall linearly change the reference value towards a target reference value 78, wherein the target reference value 78 is based on a current reference value of a neighboring event pixel, here event pixel #4, as indicated by the lower left arrow. Then, event pixel #3 shall linearly change the reference value towards a target reference value 79, wherein the target reference value 79 is based on a current reference value of a neighboring event pixel, here event pixel #5, as indicated by the lower right arrow.

Hence, the brightness prediction model for event pixel #3 indicates a list of target reference values to be used in sequence, wherein each target reference value corresponds to a current reference value of a different neighboring event pixel, here event pixel #4 and then event pixel #5.

In the following, the model example will be discussed.

Model Example 3: Pixel transport.

Parameters: Address of another pixel on the event sensor 31, ADR, duration T.

Model: Immediately copy current reference R_ADR of neighboring pixel indicated by ADR - this is the target reference value. Then, start with current reference value of the event pixel. Then, continuously transfer the reference value towards the target reference value with duration T linearly in time. Then, repeat the same process for other reference value.

Variants: Transfer curve from current reference value of the event pixel to the target reference value is non-linear, e.g. a quadratic or cubic function. Use actual brightness value instead of reference value of the neighboring event pixels. As mentioned above, use a list of event pixels instead of a single event pixel and define target reference value from a weighted combination of the reference values of the neighboring event pixels.

In the following an application example will be discussed.

Application Example 2: Compensation of camera rotation.

Setup: Camera with event sensor 31 is rotating around a fixed pivot point, e.g. a controlled, articulated motion. Usually, a static scene is assumed.

Example applications: Surveillance.

Aim: Suppress events caused by camera rotation and viewing direction; keep events related to any other scene changes, e.g. moving objects.

### Implementation:

Receive (e.g., by the prediction module 33) information on future camera motion, e.g. from camera rotation control.

For each event pixel, compute (e.g., by the prediction module 33) apparent motion of projected scene point as a two-dimensional velocity vector in image plane, based on camera rotation direction and speed, camera projection model, and event pixel position on the event sensor 31.

For each pixel, generate (e.g., by the prediction module 33) a brightness prediction model.

For example: A pixel transport model, where the apparent motion direction indicates the neighborhood pixel(s) and the apparent motion velocity the duration for the change. A sequence of constant change rates, based on a reference image and its apparent projection into the event sensor based on the predicted camera motion.

Event pixel receives brightness prediction model and continuously updates reference value based on the prediction model.

Down-stream module 34 receives: Predicted camera motion; pixel-wise predicted motion; pixel-wise brightness prediction models; events.

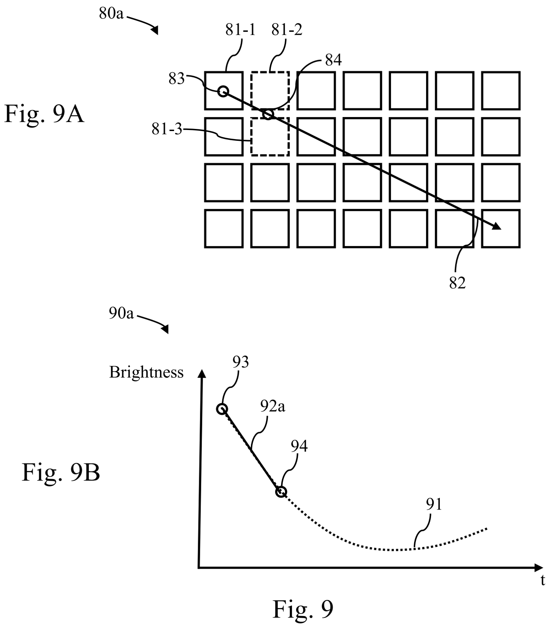

Fig. 9 schematically illustrates an embodiment of a method for generating a brightness prediction model, which is discussed in the following, wherein Fig. 9A schematically illustrates in a block diagram an embodiment of a matrix of event pixels 80a and Fig. 9B schematically illustrates in a graph 90a an embodiment of a future time-dependent brightness associated with an event pixel.

Referring to Fig. 9A, the matrix of event pixels includes an event pixel 81-1 for which the brightness prediction model is to be determined by the prediction module 33.

The prediction module 33 predicted a change of the scene due to the relative movement of the event sensor 31 with respect to a static part of the scene such that the image of the scene moves along the matrix of event pixels. The relative movement of the event sensor 31 is indicated by the arrow 82 in Fig. 9A such that the image of the scene moves opposite to the direction indicated by the arrow 82.

The neighboring event pixels 81-2 and 81-3 are arranged along the relative moving direction of the event sensor 31 such that they can be used to predict a future brightness value for the event pixel 81-1, wherein circle 83 indicates the start point and circle 84 a point in the future after a certain time interval.

Referring now to Fig. 9B, the graph 90a indicates as a dotted line the actual brightness evolution for event pixel 81-1 in the future.

The prediction module 33 now takes the current reference value of the event pixel 81-1 as a start point 93 for the brightness prediction and a weighted combination of the current reference values of the event pixels 81-2 and 81-3 as an endpoint 94 of the brightness prediction.

The prediction module 33 linearly interpolates between start point 93 and endpoint 94 to get a slope of the linear prediction 92a.

The prediction module 33 generates the brightness prediction model based on linear prediction 92a, the start point 93 and the endpoint 94 such that the brightness prediction model includes the current reference value of event pixel 81-1, the target reference value corresponding to the endpoint 94 which is given by the weighted combination of the current reference values of the event pixels 81-2 and 81-3 and the slope of the linear prediction 92a.

In the following an application example is discussed.

### Application Example 3: Compensation of complex vehicle/camera motion

Setup: Camera with event sensor 31 is mounted to a vehicle, which moves through a scene (usually static scene).

Example applications: Assisted driving, autonomous driving, robotics, visual navigation, UAV ("Unmanned Aerial Vehicle").

Aim: Suppress events caused by own camera/vehicle motion; keep events related to any other changes, e.g. moving objects.

### Implementation:

Receive (e.g., by the prediction module 33) information on current camera motion (three-dimensional translational and rotational instantaneous velocity), e.g. from IMU, GNSS, wheel odometry, visual/LiDAR/radar odometry, event-camera based odometry
Update (e.g., by the prediction module 33) a camera motion model for three-dimensional translational and rotational velocity, acceleration, jerk or possible more properties, e.g., an unscented/extended Kalman filter, Bayesian recursive filter.

Based on the filter state predict (e.g., by the prediction module 33) the camera trajectory in near future.

For each event pixel, receive (e.g., by the prediction module 33) information on distance of the projected scene point, e.g. from LiDAR measurements, structure-from-motion methods applied to camera data, and/or structure-from-motion methods applied to the event camera data.

For each event pixel, compute (e.g., by the prediction module 33) apparent motion of projected scene point as a two-dimensional velocity vector in image plane, based on predicted camera trajectory, camera projection model, event pixel distance, and event pixel position on the event sensor 31.

For each pixel, generate (e.g., by the prediction module 33) a brightness prediction model.

For example: a pixel transport model, where the apparent motion direction indicates the neighborhood pixel(s) and the apparent motion velocity the time period for the change. A sequence of changes, based on a reference image and its apparent projection onto the event sensor 31 based on the predicted camera motion.

Event pixel receives model and continuously updates reference value based on the prediction model.

Down-stream module 34 receives: Predicted camera motion; pixel-wise predicted motion; pixel-wise brightness prediction models; events.

Variants: Use a less detailed motion prediction model that directly determines the apparent motion in image plane, e.g. based on previous measurements (optical flow) and thus does not require depth information.

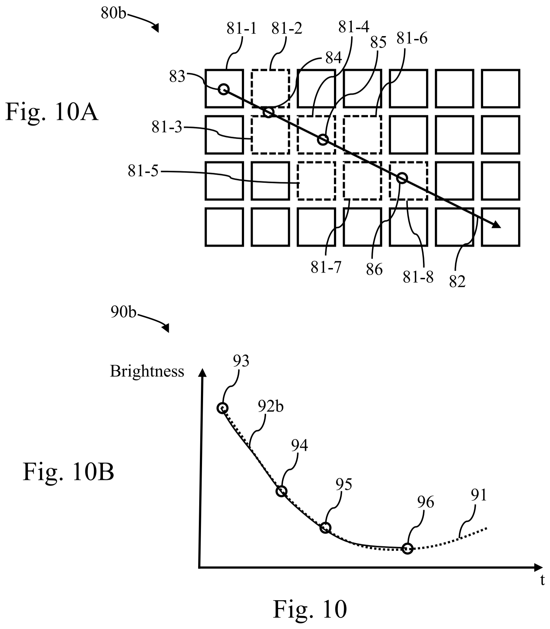

Fig. 10 schematically illustrates an embodiment of a method for generating a brightness prediction model, which is discussed in the following, wherein Fig. 10A schematically illustrates in a block diagram an embodiment of a matrix of event pixels 80b and Fig. 10B schematically illustrates in a graph 90b an embodiment of a future time-dependent brightness associated with an event pixel.

The embodiment is similar to the embodiment of Fig. 9. However, the difference is that a non-linear prediction 92b is used.

The endpoint 96 is the current reference value of the event pixel 81-8 in accordance with the circle 86 along the movement direction.

The non-linear prediction 92b is now based on a two further sampling points along the arrow 82.

The sampling point 94 is based on the current reference values of event pixels 81-2 and 81-3 in accordance with the circle 84 along the movement direction.

The sampling point 95 is based on the current reference values of event pixels 81-4, 81-5, 81-6 and 81-7 in accordance with the circle 85 along the movement direction.

Then, the prediction module 33 generates the brightness prediction model based on the non-linear prediction 92b, the start point 93 and the endpoint 96.

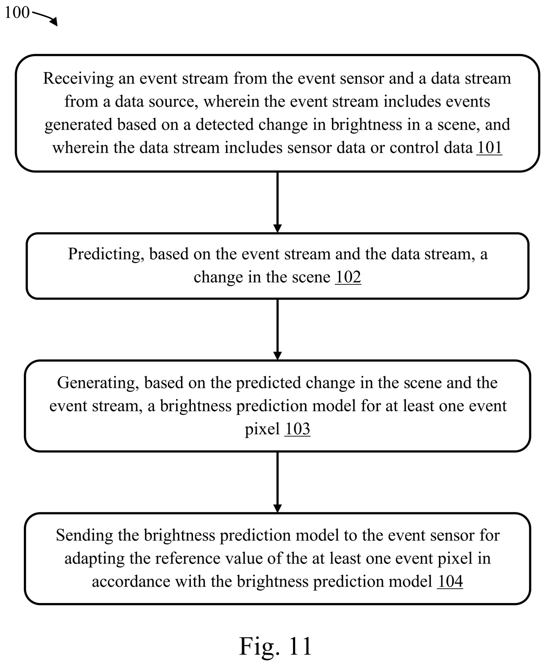

Fig. 11 schematically illustrates in a flow diagram an embodiment of a method 100, which is discussed in the following.

The method 100 may be performed by the data processing device as described herein.

At 101, an event stream from the event sensor and a data stream from a data source are received, wherein the event stream includes events generated based on a detected change in brightness in a scene, and wherein the data stream includes sensor data or control data, as discussed herein.

At 102, a change in the scene is predicted based on the event stream and the data stream, as discussed herein.

At 103, a brightness prediction model for the at least one event pixel is generated based on the predicted change in the scene and the event stream, as discussed herein.

At 104, the brightness prediction model is sent to the event sensor for adapting the reference value of the at least one event pixel in accordance with the brightness prediction model, as discussed herein.

Returning to the general explanations, the following summarizes some aspects of some embodiments.

A modified event sensor is provided which accepts models for the future expected brightness values in each event pixel from an external source.

An additional data processing device or processing unit or prediction module which takes into account information from previous event camera events, more than one event pixel (e.g., event pixel neighborhood or all event pixels), information from additional sensors (e.g., IMU, GNSS, other event cameras, grey scale or RGB cameras) and/or information from down-stream processing stages (e.g., visual odometry, ego motion estimation, structure from motion) to analyze the current situation and derive a brightness prediction model for single event pixels, a group of event pixels or all event pixels of the event sensor.

The brightness prediction models are provided to the event sensor to implement a new model or replace some or all previous models.

The brightness prediction models may be provided to any down-stream processing block, possibly in a summarized form.

The update of the brightness prediction models may be triggered by a timer with fixed interval, when the model reaches a preset time limit, i.e. when the predicted validity period of the model is exceeded and/or when events indicate that the model is not suitable anymore to describe the changes in measurements.

The prediction models need to be designed to match the application scenario but also the sensor interface.

In application scenarios, for instance, where a significant number of changes in the measurements can be predicted, at least one of the following may be achieved and/or provided:
Events are filtered for importance. Predictable measurements are not informative, and related events are filtered out. Non-predicted events are informative and are kept in the event stream.

Down-stream module complexity requirements are reduced as they are not overwhelmed by uninformative events but can focus on important events only.

Compression: The measurement changes described by the filtered-out events are not lost to down-stream modules but summarized in the brightness prediction models. The brightness prediction models provided to down-stream modules summarize events over time and thus reduce data transfer. The brightness prediction models can be used in down-stream modules as a pre-processing step.

The overall number of triggered events is reduced.

It should be recognized that the embodiments describe methods with an exemplary ordering of method steps. The specific ordering of method steps is however given for illustrative purposes only and should not be construed as binding.

All units and entities described in this specification and claimed in the appended claims can, if not stated otherwise, be implemented as integrated circuit logic, for example on a chip, and functionality provided by such units and entities can, if not stated otherwise, be implemented by software.

In so far as the embodiments of the disclosure described above are implemented, at least in part, using software-controlled data processing apparatus, it will be appreciated that a computer program providing such software control and a transmission, storage or other medium by which such a computer program is provided are envisaged as aspects of the present disclosure.

Note that the present technology can also be configured as described below.
(1) A system, wherein the system includes:
   an event sensor including a plurality of event pixels, wherein each event pixel is configured to detect, based on a reference value and threshold values, a brightness change in a scene to generate an event, and wherein the event sensor is configured to output an event stream;
   a data source configured to provide a data stream, wherein the data stream includes sensor data or control data;
   a data processing device including circuitry configured to:
      receive the event stream from the event sensor and the data stream from the data source;
      predict, based on the event stream and the data stream, a change in the scene;
      generate, based on the predicted change in the scene and the event stream, a brightness prediction model for the at least one event pixel;
      send the brightness prediction model to the event sensor; and
   wherein the event sensor is configured to receive the brightness prediction model for the at least one event pixel from the data processing device and to adapt the reference value of the at least one event pixel in accordance with the received brightness prediction model.
(2) The system of (1), wherein the circuitry is configured to predict, based on the data stream, a relative movement of a static part of the scene with respect to the event sensor as the change in the scene.
(3) The system of (1) or (2), wherein the circuity is configured to predict, based on at least one of the event stream and the data stream, a change of illumination of the scene as the change of the scene.
(4) The system of any one of (1) to (3), wherein the brightness prediction model includes a time-dependent reference value to be used by the at least one event pixel.
(5) The system of (4), wherein the brightness prediction model indicates a piecewise constant reference value or a constant change rate of the reference value.
(6) The system of (4), wherein the brightness prediction model indicates a reference value that continuously changes from the current reference value towards a target reference value, and wherein the target reference value is based on a current reference value of at least one neighboring event pixel of the at least one event pixel.
(7) The system of (6), wherein the brightness prediction model indicates a list of target reference values to be used in sequence, and wherein each target reference value corresponds to a current reference value of a different neighboring event pixel.
(8) The system of any one of (1) to (7), wherein the brightness prediction model includes a sequence of brightness prediction models or an indication of a periodic repetition of one or more brightness prediction models.
(9) The system of any one of (1) to (8), wherein the circuitry is configured to update the brightness prediction model every fixed time interval or when a preset time limit has elapsed or when the event stream indicates that the current brightness prediction model is not suitable anymore.
(10) The system of any one of (1) to (9), wherein the data source is an application that uses the event stream, and the data stream includes control data indicating a movement of the event sensor, and wherein the circuity is configured to provide the brightness prediction model for the at least one event pixel to the application.
(11) The system of any one of (1) to (10), wherein the system is implemented as an apparatus.
(12) An event sensor, wherein the event sensor includes:
   a plurality of event pixels, wherein each event pixel is configured to detect, based on a reference value and threshold values, a brightness change in a scene to generate an event;
   circuitry configured to:
      output an event stream;
      receive a brightness prediction model for at least one event pixel; and
      adapt the reference value of the at least one event pixel in accordance with the received brightness prediction model.
(13) A data processing device, wherein the data processing device includes circuitry configured to:
   receive an event stream from an event sensor and a data stream from a data source, wherein the event stream includes events generated based on a detected change in brightness in a scene, and wherein the data stream includes sensor data or control data;
   predict, based on the event stream and the data stream, a change in the scene;
   generate, based on the predicted change in the scene and the event stream, a brightness prediction model for the at least one event pixel; and
   send the brightness prediction model to the event sensor for adapting the reference value of the at least one event pixel in accordance with the brightness prediction model.
(14) A method, wherein the method includes:
   receiving an event stream from the event sensor and a data stream from a data source, wherein the event stream includes events generated based on a detected change in brightness in a scene, and wherein the data stream includes sensor data or control data;
   predicting, based on the event stream and the data stream, a change in the scene;
   generating, based on the predicted change in the scene and the event stream, a brightness prediction model for the at least one event pixel; and
   sending the brightness prediction model to the event sensor for adapting the reference value of the at least one event pixel in accordance with the brightness prediction model.
(15) The method of (14), including predicting, based on the data stream, a relative movement of a static part of the scene with respect to the event sensor as the change in the scene.
(16) The method of (14) or (15), including predicting, based on at least one of the event stream and the data stream, a change of illumination of the scene as the change of the scene.
(17) The method of any one of (14) to (16), wherein the brightness prediction model includes a time-dependent reference value to be used by the at least one event pixel.
(18) The method of (17), wherein the brightness prediction model indicates a piecewise constant reference value or a constant change rate of the reference value.
(19) The method of (17), wherein the brightness prediction model indicates a reference value that continuously changes from the current reference value towards a target reference value, and wherein the target reference value is based on a current reference value of at least one neighboring event pixel of the at least one event pixel.
(20) The method of (19), wherein the brightness prediction model indicates a list of target reference values to be used in sequence, and wherein each target reference value corresponds to a current reference value of a different neighboring event pixel.
(21) A computer program comprising program code causing a computer to perform the method according to anyone of (14) to (20), when being carried out on a computer.
(22) A non-transitory computer-readable recording medium that stores therein a computer program product, which, when executed by a processor, causes the method according to anyone of (14) to (20) to be performed.

## Claims

1. A system, comprising:
an event sensor including a plurality of event pixels, wherein each event pixel is configured to detect, based on a reference value and threshold values, a brightness change in a scene to generate an event, and wherein the event sensor is configured to output an event stream;
a data source configured to provide a data stream, wherein the data stream includes sensor data or control data;
a data processing device including circuitry configured to:
receive the event stream from the event sensor and the data stream from the data source;
predict, based on the event stream and the data stream, a change in the scene;
generate, based on the predicted change in the scene and the event stream, a brightness prediction model for at least one event pixel;
send the brightness prediction model to the event sensor; and
wherein the event sensor is configured to receive the brightness prediction model for the at least one event pixel from the data processing device and to adapt the reference value of the at least one event pixel in accordance with the received brightness prediction model.

2. The system of claim 1, wherein the circuitry is configured to predict, based on the data stream, a relative movement of a static part of the scene with respect to the event sensor as the change in the scene; and/or wherein the circuity is configured to predict, based on at least one of the event stream and the data stream, a change of illumination of the scene as the scene.

3. The system of claim 1 or 2, wherein the brightness prediction model includes a time-dependent reference value to be used by the at least one event pixel.

4. The system of claim 3, wherein the brightness prediction model indicates a piecewise constant reference value or a constant change rate of the reference value.

5. The system of claim 3, wherein the brightness prediction model indicates a reference value that continuously changes from the current reference value towards a target reference value, and wherein the target reference value is based on a current reference value of at least one neighboring event pixel of the at least one event pixel.

6. The system of claim 5, wherein the brightness prediction model indicates a list of target reference values to be used in sequence, and wherein each target reference value corresponds to a current reference value of a different neighboring event pixel.

7. The system of any one of claims 1 to 6, wherein the brightness prediction model includes a sequence of brightness prediction models or an indication of a periodic repetition of one or more brightness prediction models; and/or wherein the circuitry is configured to update the brightness prediction model every fixed time interval or when a preset time limit has elapsed or when the event stream indicates that the current brightness prediction model is not suitable anymore; and/or wherein the data source is an application that uses the event stream, and the data stream includes control data indicating a movement of the event sensor, and wherein the circuity is configured to provide the brightness prediction model for the at least one event pixel to the application; and/or wherein the system is implemented as an apparatus.

8. An event sensor, comprising:
a plurality of event pixels, wherein each event pixel is configured to detect, based on a reference value and threshold values, a brightness change in a scene to generate an event;
circuitry configured to:
output an event stream;
receive a brightness prediction model for at least one event pixel; and
adapt the reference value of the at least one event pixel in accordance with the received brightness prediction model.

9. A data processing device, comprising circuitry configured to:
receive an event stream from an event sensor and a data stream from a data source, wherein the event stream includes events generated based on a detected change in brightness in a scene, and wherein the data stream includes sensor data or control data;
predict, based on the event stream and the data stream, a change in the scene;
generate, based on the predicted change in the scene and the event stream, a brightness prediction model for at least one event pixel; and
send the brightness prediction model to the event sensor for adapting the reference value of the at least one event pixel in accordance with the brightness prediction model.

10. A method, comprising:
receiving an event stream from the event sensor and a data stream from a data source, wherein the event stream includes events generated based on a detected change in brightness in a scene, and wherein the data stream includes sensor data or control data;
predicting, based on the event stream and the data stream, a change in the scene;
generating, based on the predicted change in the scene and the event stream, a brightness prediction model for the at least one event pixel; and
sending the brightness prediction model to the event sensor for adapting the reference value of the at least one event pixel in accordance with the brightness prediction model.

11. The method of claim 10, comprising predicting, based on the data stream, a relative movement of a static part of the scene with respect to the event sensor as the change in the scene; and/or comprising predicting, based on at least one of the event stream and the data stream, a change of illumination of the scene as the change of the scene.

12. The method of claim 10 or 11, wherein the brightness prediction model includes a time-dependent reference value to be used by the at least one event pixel.

13. The method of claim 12, wherein the brightness prediction model indicates a piecewise constant reference value or a constant change rate of the reference value.

14. The method of claim 12, wherein the brightness prediction model indicates a reference value that continuously changes from the current reference value towards a target reference value, and wherein the target reference value is based on a current reference value of at least one neighboring event pixel of the at least one event pixel.

15. The method of claim 14, wherein the brightness prediction model indicates a list of target reference values to be used in sequence, and wherein each target reference value corresponds to a current reference value of a different neighboring event pixel.
